# EUROPÄISCHE PATENTANMELDUNG

(11) **EP 0 629 099 A2**
(43) Veröffentlichungstag der Anmeldung: **14.12.1994**
(21) Anmeldenummer: 94108049.1
(22) Anmeldetag: 25.05.1994
(51) Int. Cl.: H04Q 11/00, H04Q 3/52, H04B 10/20, H04B 10/24

(54) **Optisches Netz**

(30) Priorität: 05.06.1993 DE 4318732
(71) Anmelder: Alcatel SEL Aktiengesellschaft, D-70435 Stuttgart (DE)
(72) Erfinder: Ohnsorge, Horst, Dr., D-71691 Freiberg (DE)
(74) Vertreter: Kugler, Hermann, Dipl.-Phys.

(57) **Zusammenfassung**

Das erfindungsgemäße Lichtwellenleiter-Netz ist ein Verzweigungsnetz, bei dem an aktiven oder passiven Verzweigungspunkten (A, B) jeweils nur drei Lichtwellenleiter miteinander verbunden sind. Die Verzweigungspunkte sind so gestaltet, daß sie in drei Wegen jeweils eine bidirektionale Übertragung ermöglichen. Teilnehmereinrichtungen (F) sind an beliebigen Punkten der Lichtwellenleiter des Netzes angeschlossen oder anschließbar. Um die Betriebssicherheit zu erhöhen, ist eine Lichtwellenleiter-Ringleitung (50) vorhanden, an die die Enden der ein Verzweigungsnetz bildenden Lichtwellenleiter über steuerbare optische Schalter (D) anschließbar sind.

## Beschreibung

Die Erfindung betrifft ein Netz zur Übermittlung von Nachrichten zwischen an Anschlußpunkten des Netzes angeschlossenen Teilnehmern durch Licht als Träger, bei dem von jedem der Teilnehmer in das Netz gesendete optische Signale an jedem Teilnehmer-Anschlußpunkt empfangen werden können.

Ein Netz mit den vorstehend genannten Merkmalen ist bekannt aus M. Brain und P. Cochrane: "Eradicating the central office with Coherent Optical Technology", 1988 International Zürich Seminar on Digital Communications: Mapping New Application onto New Technologies (Cat. No. 88 TH 0202-2), Seiten 59 bis 62.

Zur Übertragungskapazität des Netzes haben alle angeschlossenen Teilnehmer Zugriff. Das Netz wird auch als "Optischer Äther" bezeichnet. Nachrichtenverbindungen können durch Wahl der Wellenlängen der bei den Teilnehmern vorhandenen optischen Sender und Empfänger eingerichtet werden. Dadurch hat das Netz eine hohe Flexibilität.

Die Topologie des Netzes ist entweder sternförmig oder ringförmig. Bei der sternförmigen Topologie befinden sich die Teilnehmer-Anschlußpunkte an den Enden der sternförmig verlaufenden Lichtwellenleiter. An den Sternpunkten des Netzes befinden sich passive Leistungsteiler, in der Literatur üblicherweise Sternkoppler genannt, an denen eine große Anzahl von Lichtwellenleitern miteinander verbunden sind. Dadurch entstehen vielerlei Reflexionen von optischen Signalen bei Ihrer Ausbreitung über das Netz, so daß bei den Teilnehmern ein großer technischer Aufwand getrieben werden muß, um unerwünschte und störende Informationen zu unterdrücken. Ein weiterer Nachteil ist, daß die Betriebssicherheit und Qualität der Nachrichtenübertragung in dem Netz sehr stark von der Qualität der wenigen Sternkoppler abhängt. Ein einziger nicht oder schlecht funktionierender Sternkoppler schadet also der Qualität einer Vielzahl von Nachrichtenverbindungen. Im übrigen haben Sternkoppler generell den Nachteil, daß sie optische Signale stark dämpfen.

Es ist die Aufgabe der Erfindung, ein optisches Netz anzugeben, das mit dem bekannten Netz zwar die eingangs genannten Merkmale gemeinsam hat, jedoch die geschilderten Nachteile nicht mehr aufweist.

Die Aufgabe ist wie im Patentanspruch angegeben gelöst. Weiterbildungen ergeben sich aus den Unteransprüchen.

Die Erfindung wird nun anhand der Zeichnungen, die Ausführungsbeispiele zeigen, näher erläutert.

Es zeigen:
- Figur 1: ein Beispiel des neuen Verzweigungsnetzes mit Verzweigungspunkten und Anschlußpunkten für Teilnehmer,
- Figur 2: ein Ausführungsbeispiel der in Fig.1 gezeigten Verzweigungspunkte A,
- Figur 3: ein Ausführungsbeispiel der in Fig.1 gezeigten Verzweigungspunkte B,
- Figur 4: ein Ausführungsbeispiel der in Fig.1 gezeigten optischen Netzabschlüsse F,
- Figur 5: das in Fig.1 gezeigte erfindungsgemäße Netz, erweitert durch eine Ringleitung und
- Figur 6: eine schematische Darstellung der Funktion des in Fig.5 mit D bezeichneten Symbols.

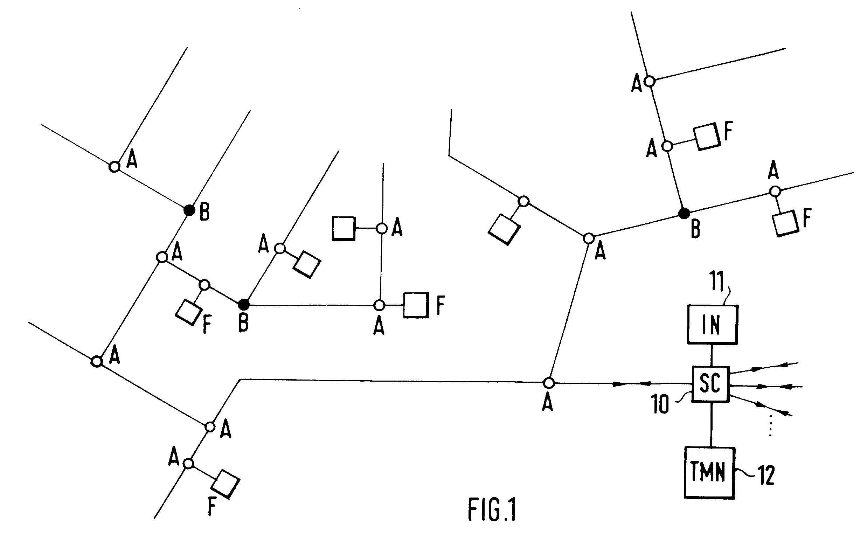

In Fig.1 stellen die durchgezogenen Linien Lichtwellenleiter dar, die in einem beispielsweise betrachteten geographischen Gebiet je nach örtlichen Gegebenheiten und Bedarf an Nachrichtenübertragungsstrecken verlegt sind. An Verzweigungspunkten stoßen jeweils mehrere Lichtwellenleiter aufeinander, so daß die Lichtwellenleiter mit diesen Verzweigungspunkten ein Lichtwellenleiter-Netz bilden. Eines der wesentlichen Merkmale des erfindungsgemäßen Netzes ist, daß an den Verzweigungspunkten nur drei Lichtwellenleiter miteinander verbunden sind. (Bei einem Lichtwellenleiter-Netz mit Sternstruktur sind an den Sternpunkten eine weit größere Anzahl von Lichtwellenleitern miteinander verbunden, z.B. 16 oder 46.) Um das neue Netz begrifflich von den bekannten Netzstrukturen zu unterscheiden, wird es im folgenden als Verzweigungsnetz bezeichnet.

Ein weiteres wesentliches Merkmal ist, daß an Enden von Lichtwellenleitern keine Teilnehmereinrichtungen angeschlossen sind. Das Verzweigungsnetz hat also freie Enden. Dies hat den Vorteil, daß es beliebig verlängerbar oder weiter verzweigbar ist und noch einen wesentlichen Vorteil, der an späterer Stelle beschrieben wird.

Um sicherzustellen, daß an freien Enden von Lichtwellenleitern keine störenden Reflexionen von optischen Signalen auftreten, sind diese Enden reflexionsfrei abgeschlossen. Dies ist eine an sich bekannte Technik, die z.B. in dem Buch " Optische Informationsübertragung mit Lichtwellenleitern" von D. Rosenberger, Expertverlag, 7031 Grafenau 1/Württ, 1982, auf Seite 138 im Abschnitt 8.4.4, für offene optische T-Busse erwähnt ist. Sie bedarf daher hier keiner näheren Erläuterung.

Ein weiteres Merkmal des erfindungsgemäßen Verzweigungsnetzes ist, daß die Punkte, an denen Teilnehmereinrichtungen an das Netz angeschlossen sind oder anschließbar sind, beliebige Punkte entlang der einzelnen Lichtwellenleiter des Netzes sind. Wo immer entlang einer Lichtwellenleiterstrecke des Netzes Bedarf ist, einen Teilnehmer anzuschließen und wo der Lichtwellenleiter örtlich zugänglich ist, kann ein Anschlußpunkt in den Lichtwellenleiter eingefügt werden. Wie ein solcher Anschlußpunkt beschaffen ist, wird an späterer Stelle erläutert. Das entsprechende gilt auch, wenn Bedarf entsteht, das Netz an irgendeiner Stelle innerhalb des Verlaufes eines Lichtwellenleiters weiter zu verzweigen. Auch dann wird an einer solchen Stelle ein Verzweigungspunkt eingefügt.

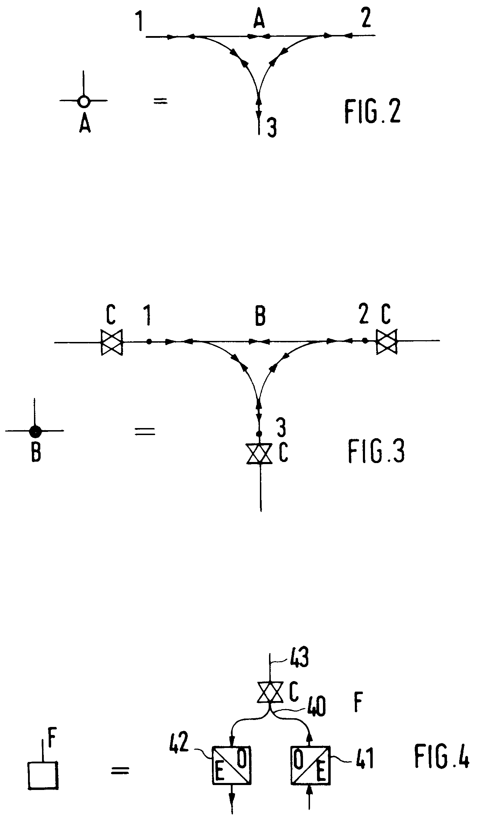

Wie Verzweigungspunkte erfindungsgemäß beschaffen sind, wird nachstehend erläutert. Die Fig.1 zeigt, daß es in dem Verzweigungsnetz unterschiedlich symbolisierte Verzweigungspunkte A und B gibt. Die Ausführung eines Verzweigungspunktes A ist in Fig.2 gezeigt. Für die drei durch ihn zu verbindenden Lichtwellenleiter hat er drei Anschlüsse 1, 2 und 3. An jedem Anschluß enthält er einen Lichtwellenleiter-Koppler, der durch Aneinanderschmelzen zweier Lichtwellenleiterstücke nach der an sich bekannten Technik der Herstellung von Faser-Schmelzkopplern hergestellt ist. Die Koppler sind dabei so verbunden, daß zwischen jeweils zwei von drei Anschlüssen eine Lichtwellenleiter-Verbindung besteht. Sie bilden somit insgesamt einen Koppler mit drei Übertragungswegen, einen ersten zwischen den Anschlüssen 1 und 2, einen zweiten zwischen den Anschlüssen 1 und 3 und einen dritten zwischen den Anschlüssen 3 und 2. Da die Lichtübertragung in Kopplern und Lichtwellenleitern immer bidirektional ist, ist auch dieser Koppler in den drei Übertragungswegen jeweils bidirektional. Ein derartiger Koppler ist bekannt aus der DE-A1-27 28 686, Fig.4. Verwendet ist er dort allerdings in einem ringförmigen Netz.

Wie man sieht, ist ein durch einen Koppler nach Fig.2 realisierter Verzweigungspunkt A rein passiv. Im Gegensatz dazu gibt es im neuen Verzweigungsnetz nach Fig.1 auch aktive Verzweigungspunkte. Sie sind mit B bezeichnet und wie in Fig.3 gezeigt realisiert. Von den Verzweigungspunkten A unterscheiden sie sich nur dadurch, daß an den Anschlüssen des Kopplers optische Verstärker C, vorzugsweise faseroptische Verstärker mit Erbium-dotierten Verstärkungsfasern, in die Übertragungswege eingefügt sind. Da optische Verstärker bidirektional sind, ist für sie in der Fig.3 das Symbol eines bidirektionalen Verstärkers verwendet. Unter Umständen ist es nicht erforderlich, an allen drei Anschlüssen des den Verzweigungspunkt bildenden Kopplers optische Verstärker vorzusehen.

Zum Anschluß von Teilnehmereinrichtungen an das neue Netz nach Fig.1 dienen ebenfalls Verzweigungspunkte der vorstehend beschriebenen Art, im Regelfalle passive Verzweigungspunkte A. Wie bereits oben erwähnt, können sie an beliebigen Punkten der einzelnen Lichtwellenleiter des Netzes eingefügt sein oder eingefügt werden. An sie ist jeweils ein sogenannter optischer Netzabschluß F über ein Lichtwellenleiterstück angeschlossen. Fig.4 zeigt, wie der optische Netzabschluß F realisiert sein kann.

Mittels eines Lichtwellenleiter-Kopplers 40 ist der Ausgang eines optischen Senders 41 und der Eingang eines optischen Empfängers 42 an ein zu dem genannten Anschlußpunkt führendes Lichtwellenleiter-Stück 43 angeschlossen. In das Lichtwellenleiter-Stück 43 ist ein faseroptischer Verstärker C eingefügt, der, unter Umständen, auch entfallen kann. An diesem optischen Netzanschluß F können Endgeräte des Teilnehmers direkt angeschlossen werden, oder es können Multiplexer und Demultiplexer zum Anschluß verschiedener Endgeräte oder verschiedener Teilnehmer angeschlossen werden.

Wie ohne weiteres ersichtlich ist, hat das in Fig.1 gezeigte optische Netz die Eigenschaft, daß optische Signale, die von einem Netzabschluß F aus in das Netz gesendet werden, von jedem anderen Netzabschluß F empfangen werden können. Welche optischen Netzabschlüsse mit welchen anderen in Verbindung stehen, wird, wie aus der eingangs genannten Veröffentlichung bekannt, durch die Wellenlänge bestimmt, auf die die optischen Sender und die optischen Empfänger eingestellt sind. Die optischen Sender und optischen Empfänger sind also jeweils so steuerbar, daß sie bei einer bestimmten Wellenlänge senden bzw. empfangen.

Ein in der Wellenlänge einstellbarer optischer Sender ist z.B. der aus Electronics Letters, 21. November 1991, Vol. 27, No. 24, Seiten 2268-2269 bekannte "Y-Laser". Als ein in der Wellenlänge steuerbarer optischer Empfänger kann ein Überlagerungsempfänger verwendet werden, wie er z.B. aus der EP-A2 0 485 812 bekannt ist. Für den Zugriff der Teilnehmer zu dem Netz können auch die bekannten Multiplex-Übertragungsverfahren angewendet werden, z.B. TDMA, CDMA, ATM, STM.

Ein optischer Vermittlungsknoten 10 (in Fig.1 mit den Buchstaben SC bezeichnet, SC = Switching Center) dient dazu, das optische Netz mit einem oder mehreren anderen optischen Netzen zu verbinden. Optische Vermittlungsknoten sind an sich bekannt (z.B. aus DE-OS 41 08 213) und bedürfen daher hier keiner näheren Erläuterung.

Netze, mit denen der optische Vermittlungsknoten 10 das in Fig.1 gezeigte Verzweigungsnetz verbinden kann, können Verzweigungsnetze gleicher Art sein oder es kann auch eine Verbindung zu einem Transportnetz realisiert sein, das Übergänge in andere Verzweigungsnetze ermöglicht, aber keine Netzabschlüsse für Teilnehmer enthält, jedoch ansonsten wie das in Fig.1 gezeigte Netz aufgebaut sein kann. An den Vermittlungsknoten 10 kann auch ein "Intelligentes Netz" 11 angeschlossen sein, durch das wie in heutigen Netzen beliebige Mehrwertdienste den Teilnehmern über das Verzweigungsnetz angeboten werden können.

Ein Netzwerk-Management-Netz 12 steuert und überwacht in dem neuen Verzweigungsnetz die angewendeten Übertragungsverfahren, die Bitraten, den Nachrichtenverkehr, die Gebührenerfassung und die Funktionsfähigkeit. Es hat über den optischen Vermittlungsknoten 10 Zugang zu dem Verzweigungsnetz. Netzwerk-Management-Netze zur Steuerung von Übertragungs- und Vermittlungsnetzen sind bekannt, z.B. aus telcom report 14 (1991), Heft 1, Seiten 48 - 51.

Nachstehend wird eine mögliche Betriebsform des Verzweigungsnetzes an einem Beispiel erläutert. Aus dem vorstehenden ist jedoch offensichtlich, daß eine Vielzahl anderer Betriebsformen mit dem neuen Verzweigungsnetz möglich sind. An einer Anzahl von optischen Netzabschlüssen F sei je ein Teilnehmer angeschlossen, der ein Multimedial-Terminal für Text-, Graphik-, Fax-, Videofestbild und Audio-visuelle-Kommunikationen besitzt. Falls eine solche Teilnehmergruppe ein eigenes Netz ("Corporate Network'') wünscht, so teilt der Vermittlungsknoten 10 dieser Gruppe mit Hilfe des Netzwerk-Management-Netzes 12 eine Wellenlänge zu, die für eine Nachrichtenübertragung mit der angeforderten maximalen Bitfolgefrequenz geeignet ist. Alle optischen Sender 41 und optischen Empfänger 42 der optischen Netzabschlüsse F der Teilnehmergruppe werden nun auf die Wellenlänge und vorgegebene Bitfolgefrequenz eingestellt. Das Netzwerk-Management-Netz 12 sendet nun wie bei einem Ethernet von Teilnehmer zu Teilnehmer ein Abrufsignal (Token). Der dadurch angesprochene Netzabschluß F darf nun seine Nachricht in das Netz absenden, z.B. in Form von ATM-Zellen. Jede gesendete Zelle wird aufgrund der Verzweigungsstruktur des Netzes und der in drei Übertragungswegen jeweils bidirektionalen Koppler A oder B in jedem Zweig des Netzes transportiert und gelangt bis an das Ende jedes Zweigs des Netzes, um dort reflexionsfrei absorbiert zu werden. Der optische Empfänger jedes optischen Netzabschlusses, der der Gruppe von Teilnehmern angehört, empfängt das transportierte optische Signal (Die der Gruppe nicht angehörenden Netzabschlüsse können es nicht empfangen, weil sie auf eine andere Wellenlänge eingestellt sind.) und erkennt mit Hilfe einer zur Zelle (Nachricht) gehörenden Adresse (Header), ob die Zelle für ihn bestimmt ist. Soll die Zelle an n Teilnehmern gesendet werden, so wird sie entweder n mal mit jeder Zieladresse ausgesendet oder die der Gruppe angehörenden Teilnehmer (''Konferenzteilnehmer") vereinbaren vor ihrer Konferenz eine gemeinsame Konferenzadresse, so daß alle Teilnehmer die Zellen (Konferenz-Zellen) erhalten. Ein Teilnehmer kann während einer Konferenz auch ein ''Side-Meeting" mit einem der Konferenzteilnehmer oder mit einem nicht an der Konferenz teilnehmenden Partner im Netz abhalten, indem er die Adresse dieses Konferenzteilnehmers oder Partners benutzt. Die Teilnehmer können jedes beliebige Medium des Multimedia-Terminals zur Kommunikation benutzen.

Bei der oben geschilderten Betriebsart besteht für die betrachtete Teilnehmergruppe sozusagen ein virtuelles Netz innerhalb des gesamten Verzweigungsnetzes. Der restliche Teil des Verzweigungsnetzes kann parallel dazu in beliebiger Weise benutzt werden. Der Übergang von einem virtuellen Netz in andere virtuelle Netze des Verzweigungsnetzes geschieht über den Vermittlungsknoten 10 oder durch Umschaltung von Netzabschlüssen F, gesteuert durch das Management-Netz 12.

Wie aus der vorstehenden Beschreibung ersichtlich ist, bietet das neue Netz in jeder Hinsicht eine sehr hohe Flexibilität und kommt mit einem Minimum von verschiedenartigen Netzelementen aus. Ein weiterer Vorteil des Netzes ist, daß es auf einfachste Weise hinsichtlich Teilnehmerzahl und geographischer Ausdehnung sowie topologischer Struktur erweiterbar ist, ohne daß Vorinvestitionen erforderlich sind.

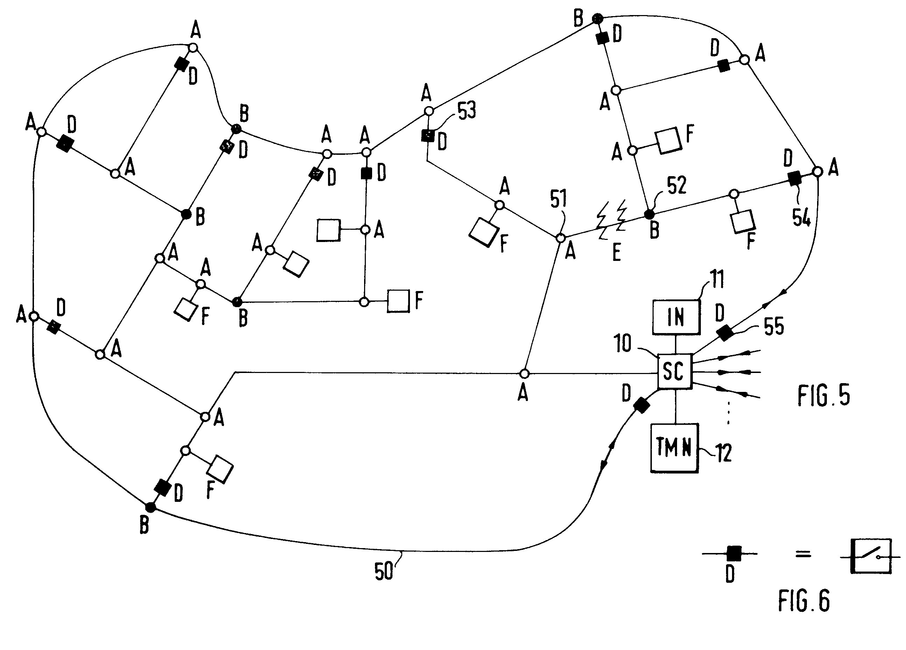

Was die Betriebssicherheit des Netzes betrifft, so bietet es noch einen besonderen Vorteil, der anhand von Fig.5 erläutert wird. Gemäß einer Weiterbildung der Erfindung sind die Enden der das Verzweigungsnetz bildenden Lichtwellenleiter mit Hilfe von Verzweigungspunkten A oder B der bereits erläuterten Art an einen ringförmig verlaufenden Lichtwellenleiter 50 angeschlossen. Am Ende jedes der Lichtwellenleiter des Verzweigungsnetzes vor dem Verzweigungspunkt A oder B ist in den jeweiligen Lichtwellenleiter ein steuerbarer optischer Schalter D eingefügt. Das Ende eines Lichtwellenleiters des Verzweigungsnetzes ist also nur dann an die Ringleitung 50 angeschlossen, wenn der betreffende optische Schalter D "geschlossen" ist. Fällt ein Teil des Verzweigungsnetzes aus, z.B. durch Faserbruch oder durch Ausfall eines der Verzweigungspunkte, so kann dies mit Hilfe der optischen Ringleitung und der optischen Schalter D leicht behoben werden. Bricht z.B. der zwischen Verzweigungspunkten 51 und 52 verlaufende Lichtwellenleiter, wie es in Fig.5 an einer Stelle E angedeutet ist, so kann der dadurch verursachte teilweise Ausfall des Verzweigungsnetzes ersetzt werden, indem man die optischen Schalter 53, 54 und 55 schließt. Die in Fig.5 gezeigte erfindungsgemäße Kombination des Verzweigungsnetzes mit der optischen Ringleitung bietet höchste Betriebssicherheit und hohen Schutz der Verfügbarkeit der Nachrichtenverbindung, z.B. auch gegenüber Gewaltakten (Terrorismus).

Wie oben erwähnt, sind die freien Enden der Lichtwellenleiter des Verzweigungsnetzes reflexionsfrei abgeschlossen. Im Falle, daß sie wie in Fig.5 gezeigt jeweils einen optischen Schalter D und einen Verzweigungspunkt an ihrem Ende haben, ist dies gegeben, indem der optische Schalter reflexionsfrei ausgeführt ist.

Optische Schalter sind an sich bekannt, und sie sind normalerweise reflexionsfrei. Ein geeigneter optischer Schalter ist z.B. der oben erwähnte bekannte Y-Laser, der auch als optischer Schalter betreibbar ist.

Fig.6 zeigt, daß das in Fig.5 dargestellte Element D die Funktion eines (optischen) Schalters hat. Die dick gezeichnete Seite des optischen Schalters soll seine Reflexionsfreiheit symbolisieren.

## Patentansprüche

1. Netz zur Übermittlung von Nachrichten zwischen an Anschlußpunkten angeschlossenen Teilnehmern durch Licht als Träger, bei dem von jedem der Teilnehmer in das Netz gesendete optische Signale an jedem Teilnehmer-Anschlußpunkt empfangen werden können,
**dadurch gekennzeichnet**,
- daß es ein Netz mit Verzweigungspunkten (A, B) ist, an denen jeweils drei Lichtwellenleiter miteinander verbunden sind,
- daß die drei an einem Verzweigungspunkt miteinander verbundenen Lichtwellenleiter durch einen in drei Übertragungswegen jeweils bidirektionalen Koppler miteinander verbunden sind,
- daß die Anschlußpunkte der Teilnehmer beliebige Punkte entlang der einzelnen Lichtwellenleiter des Netzes sind,
- daß an jedem der Anschlußpunkte ein in drei Übertragungswegen jeweils bidirektionaler Koppler vorhanden ist und
- daß die freien Enden der Lichtwellenleiter des Netzes reflexionsfrei abgeschlossen sind.

2. Netz nach Anspruch 1,
dadurch gekennzeichnet, daß eine Lichtwellenleiter-Ringleitung (50) vorhanden ist, daß an den Enden der Lichtwellenleiter des Netzes steuerbare optische Schalter (D) vorhanden sind, über die die Enden mit der Lichtwellenleiter-Ringleitung verbunden werden können.

3. Netz nach Anspruch 1 oder 2,
dadurch gekennzeichnet, daß ein Netzwerk-Management-Netz (12) vorhanden ist, um das Netz zu steuern und zu überwachen.

4. Netz nach einem der Ansprüche 1 bis 3,
dadurch gekennzeichnet, daß ein optischer Vermittlungsknoten (10) vorhanden ist, der das Netz mit gleichartigen Netzen verbindet.

5. Netz nach Anspruch 1,
dadurch gekennzeichnet, daß Verzweigungspunkte (A, B) an beliebigen Stellen des Netzes einfügbar sind.
